# EUROPÄISCHE PATENTSCHRIFT

(11) **EP 2 433 818 B1**
(45) Veröffentlichungstag und Bekanntmachung des Hinweises auf die Patenterteilung: **29.10.2014**
(21) Anmeldenummer: 11182422.3
(22) Anmeldetag: 22.09.2011
(51) Int. Cl.: B60C 9/17, B60C 15/024, B60C 3/06

(54) **Fahrzeugreifen für ein mehrspuriges Fahrzeug**
Vehicle tyre for a multi-track vehicle
Pneu de véhicule pour un véhicule à plusieurs voies

(30) Priorität: 22.09.2010 DE 102010046018
(43) Veröffentlichungstag der Anmeldung: 28.03.2012
(73) Patentinhaber: Janus, Jonny, 40237 Düsseldorf (DE)
(72) Erfinder: Janus, Jonny, 40237 Düsseldorf (DE)
(74) Vertreter: Gille Hrabal

(56) Entgegenhaltungen:
- EP-A1- 2 127 913
- DE-A1- 10 113 203

## Beschreibung

Die Erfindung betrifft einen Fahrzeugluftreifen für ein mehrspuriges Fahrzeug, mit Reifenwülsten, an einer radinneren Seitenwand und an einer radäußeren Seitenwand des Reifens, welche eine um Kernringe umgeschlagene Karkasse aufweisen, wobei die Reifenwülste Festigkeitsträger aufweisen.

Moderne luftgefüllte Fahrzeugreifen als unmittelbare Kontaktpartner des Fahrzeug-Gesamtsystems zur Fahrbahn stellen mit ihren
Gebrauchseigenschaften einen entscheidenden Beitrag zu den Fahreigenschaften zur Verfügung. Dies gilt in besonderen Maße für die Fahrsicherheit und Fahrkomfort.

Der bekannte elastische Reifen sitzt von der Luftfüllung gespannt quasi in einer Gleichgewichtslage symmetrisch auf der Radfelge. Beim Abrollen plattet er sich dann unter der Radlast auf der Fahrbahn so ab, dass die beiden Seitenwände bei Geradeausfahrt gleichmäßig ausbeulen. Dabei stellt der Reifen dem Fahrwerk über einen möglichst großen vertikalen Federweg einen entscheidenden Anteil an dessen Komforteigenschaften zur Verfügung.

Wird dagegen der kurvenäußere elastische Reifen bei Kurvenfahrt von den seitlich auf ihn einwirkenden Querkräften belastet, so verformt er sich der Kraftrichtung folgend (durch Verzerrung seiner beiden Seitenwände) zur Fahrzeugmitte, d. h. er nimmt nun eine belastungsabhängige asymmetrische Querschnittsform ein. Diese seitliche Formänderung des belasteten Reifenquerschnitts führt bekanntlich zu Verlusten von für einen sicheren Fahrbetrieb wichtigen Eigenschaften, insbesondere in den so genannten instationären Betriebszuständen, in denen die Reifen großen Lastschwankungen unterliegen. Während also der elastische Reifen bei Geradeausfahrt dem Fahrwerk nahezu ideale Eigenschaften zur Verfügung stellen kann, bedeutet die unvermeidliche asymmetrische Verformung bei Kurvenfahrt die Einschränkung von Lenkeigenschaften und die Verringerung der Übertragung von Kräften, insbesondere Seitenkräften. Neben dem Reifeninnendruck und der Gürtelkonstruktion hat die konstruktive Gestaltung der Reifenseitenwände den dominanten Einfluss auf die fahrdynamische Charakteristik von Reifen. So befindet sich in der Reifenseitenwand nämlich nicht nur eine leicht verformbare, weich einfedernden Zone mit membranähnlichen Eigenschaften, sondern direkt daran angebunden auch eine in radialer Richtung verlaufende, konstruktiv verstärkte, extrem biegesteife Wulstzone, welche eben nicht einfedern, sondern nur möglichst verformungsarm hohe Seitenkräfte übertragen soll (was nur bedingt erreicht wird).

Auto Reifen sind pneumatische Federsysteme, und verformen sich unter betriebsbedingten Reaktionskräften elastisch federnd sowohl radial (durch dynamisch wechselnde Radlast), lateral (bei Schräglauf, Seitenwind, Spurrillen und anderen Störkräften) als auch tangential (aus umlaufender Verformung vom Kreisbogen in die kürzere Bodenaufstandssehne), also in alle im dynamischen Fahrbetrieb vorkommenden Kraftrichtungen.

Diese permanente Verformungsarbeit der Reifenschale ist eigentlich nur in radialer Kraftrichtung zur Bildung der Gürtelplatte, und zur komfortablen Einfederung über die biegeweichen Membranzonen der Seitenwände erwünscht, während sich die lateralen zur Fahrzeugmitte gerichteten und tangentialen Verformungen durchweg nachteilig auf die Gebrauchseigenschaften auswirken (z.B. durch Verlust von Lenk und Stabilitätseigenschaften bei lateraler Deformation, bzw. hohen Rollwiderstand infolge "umlaufender Wellen" der Gürtelstruktur mit den anhängenden Seitenwänden in tangentialer Kraftrichtung). Die fahrdynamische Abstimmung der Reifenfeder hinsichtlich Handling und Komfort ist deshalb immer, eine Abwägung zwischen Zielkonflikten. Darüber hinaus erzeugen die betriebsbedingten Verformungen infolge innerer Reibung der Gummimasse Wärme, die im Wulstbereich der oberhalb der Kernringe als Kragträger wirkenden Kernreiter bzw. Wulstfahnen sehr hohe Arbeitstemperaturen erreichen kann. Diese Umwandlung von Antriebsenergie in Abfallwärme stellt einen Energieverlust als Rollwiderstand dar, der reduziert werden sollte.

Hierzu wird der mit Kernreiter und geeignetem Umschlag, der Karkassenlage bzw. weiteren konstruktiven Verstärkungen, ausgestattete biegesteife Seitenwandwulst auf dem metallischen Kernring so gelagert, dass alle lateralen Kräfte wie von einem einseitig eingespannten Kragträger übertragen werden können. Dennoch führen aber bei Kurvenfahrt hohe Querkräfte im Bereich der Bodenkontakt- - Zone auf einer genormten Radfelge zu pendelartigen Auslenkungen der sehr steifen Wulstkonstruktion, wobei sich dieser Teil der Reifenseitenwand auf dem relativ großen Radius des Felgenhorns, zu dem bei Geradeausfahrt kein formschlüssiger Kontakt besteht, unter relativen Bewegungen abrollt, sodass um dieses Maß die laterale Verformung des hochbelasteten üblichen Reifens insgesamt nachteilig vergrößert wird. Um diese sicherheitsrelevanten Eigenschaftsverluste zu verringern wurde z. B. vorgeschlagen, den Reifen durch asymmetrische Ausbildung der Radfelge so zu unterstützen, sodass er sich weniger bei Kurvenfahrt nach innen verspannt. Darüber hinaus sind auch Reifen-Konstruktionen bekannt (z. B. US 5, 749,982), die durch asymmetrische Querschnittsformen, zum Teil sogar durch ungleich lange Seitenwände (DE 29 09 427 C2), dem Eigenschaftsverlust bei Kurvenfahrt entgegen wirken sollen.

Aber auch durch oberhalb des genormten Felgenhorns angeformte so genannte Felgenschutzleisten (rim protector), die als Schutz vor Bordsteinkontakten das Horn seitlich überragen, wurde vergeblich versucht die versteifende Wirkung des Reifenwulst im Interesse besserer Seitenführungseigenschaften des symmetrisch auf der Radfelge sitzenden Reifens zu erhöhen. Dem Reifen aus DE-26 55 764-A sind Felgenschutzleisten zu entnehmen. Auch US-5,443,105 und EP-1 036 675- A2 offenbaren Reifen mit symmetrischen Aufbau. Die Felgenschutzleisten sind auf beiden Seiten identisch vorgesehen und dienen nicht der Vorspannung des Reifens, sondern dient als Felgenschutz.

DE-27 47 622-A befasst sich mit einer bewährten Karkasse, mit beidseitiger Felgenschutzleiste aus dem üblicherweise verwendeten Material von Reifen welches nicht druckfest ist. Es handelt sich dabei um einen typischen symmetrischen Aufbau.

DE-36 16 199 A offenbart einen Reifen, der einen vollkommen symmetrischen Aufbau aufweist ohne steife Wülste und druckfeste Stützprofile.

DE 101 13 203 B4 offenbart einen Fahrzeugluftreifen mit einer Karkasse, deren Festigkeitsträger um Kernringe umgeschlagen sind, wobei zwischen einer Reifenseitenwandaußenseite und einem Felgenhorn ein druckfestes Stützprofil derart angeordnet ist, um den Reifenwulst und die Reifenseitenwand in Richtung der Felgenmitte zu bewegen. Dabei wird das Stützprofil als integraler beim Fertigungsprozess seitlich angeformter Bestandteil der Festigkeitsstruktur des Reifens beschrieben. In Praxistest hat sich gezeigt, dass beim derartigen Reifen unter ungünstigen Betriebsbedingungen der gewünschte Vorspannwinkel nicht dauerhaft eingehalten werden kann. Außerdem erschweren erhöhte Eigensteifigkeiten am Reifenfuß auch dessen für die Reifen Montage erforderliche Ovalisierung, um den im Umfang kleineren Reifenfuß über den deutlich größeren Umfang des Felgenhorns zu ziehen. Neben den erschwerten Montagearbeiten erhöhen die lokal notwendig werdenden großen Montagekräfte auch die Gefahr von Beschädigungen am Reifenfuß.

DE-A-1 680 456 offenbart einen Fahrzeugluftreifen für ein mehrspuriges Fahrzeug, mit Reifenwülsten an einer radinneren Seitenwand und an einer radäußeren Seitenwand des Reifens, welche eine um Kernringe umgeschlagene Karkasse aufweisen, wobei die Reifenwülste Festigkeitsträger aufweisen. Dabei haben die Festigkeitsträger an der radinneren Seitenwand des Reifens eine größere Festigkeit als die Festigkeitsträger an der radäußeren Seitenwand. Diese werden vorgeschlagen zum Ausgleich der Effekte, die durch eine asymmetrische Lauffläche, also der Karkasse- und Scheitelverstärkung bzw. Gürtelstruktur verursacht werden. Der Laufstreifen ist asymmetrisch.

Das bereifte Rad mehrspuriger Fahrzeuge wird von der Fahrwerkgeometrie so exakt geführt, dass es auch bei Kurvenfahrt faktisch immer senkrecht zur Fahrbahn abrollt (max. 2° bis 4° Sturz). Hierfür erhält der Reifen eine näherungsweise rechteckige Querschnittsform. Damit müssen die kurvenäußeren Autoreifen nicht nur komfortabel über Fahrbahnunebenheiten einfedern können, sondern gleichzeitig auch die bei Kurvenfahrten seitlich auf sie einwirkenden Reaktionskräfte möglichst formstabil aufnehmen und übertragen, die infolge dynamischer Überhöhung ein Mehrfaches der statischen Radlast erreichen können, und somit die für die Fahrsicherheit gefährlichen Pendelschwingungen erzeugen, die über den gesamten unbelasteten Umfang des Auto-Reifens nachteilig wirken. Konstruktiv hat dies zur Folge, dass herkömmliche Auto-Reifen für die Seitenführungs-Funktion oberhalb der Kernringe eine extrem biegesteife Struktur aufweisen, z. B. Kernreiter, deren Funktion durch Einspanneffekte zwischen dem Hump und dem Felgenhorn verstärkt wird, um in einem Zielkonflikt gleichzeitig seitliche Deformationen der Reifenschale aus beiden Richtungen zur Radmitte so klein wie möglich zu halten, und größtmögliche Federwege in vertikaler Richtung ausbilden zu können. Tatsächlich arbeiten aber bei dieser Anordnung und vertikaler Radlast die beiden biegesteifen Wulstkerne immer gegeneinander, was die gesuchte Einfederung erheblich einschränkt,

Diese Betrachtung macht den Zielkonfiikt deutlich, der insbesondere in der Entwicklung von Auto-Reifen zu beachten ist. Sämtliche oben angeführte Reifen - ob mit symmetrischen oder asymmetrischen Reifenprofil, basieren auf konventionellen Reifen. Diesen liegt ein Jahrzehnte langes Verständnis der Fachwelt zugrunde, dass ein Fahrzeugluftreifen für ein mehrspuriges Fahrzeug, mit Reifenwülsten an einer radinneren Seitenwand und an einer radäußeren Seitenwand des Reifens, eine um beidseitige Kernringe und Kernreiter umgeschlagene Karkasse aufweisen müssen. Der Kernreiter mit dem Kernring bildet mit der Karkasse eine Art Kragträger, der sich gegen die Felgenhörner abstützt und somit eine seitliche Verlagerung der beiden Seitenwände jeweils von der Felge weg, verhindern soll. Es besteht dabei ein Zielkonflikt zwischen Handling und Komfort: Biegesteife Seitenwände bieten mehr Führung und Sicherheit bei Kurvenfahrt, aber weniger Komfort wegen der geringeren Einfederung. Weiche Seitenwände erhöhen durch tieferes Einfedern den Komfort, neigen aber bei Kurvenfahrten infolge der erheblichen Lastverlagerungen auf die kurvenäußere Seite zu Verzerrungen in Richtung zur Fahrzeugmitte, was eine spurweitenmindernde Verschiebung der Lauffläche relativ zur Felge bewirkt. Es besteht daher Einigkeit in der Fachwelt, dass beidseitig Seitenwände mit biegesteifen Festigkeitsträgern nötig sind.

Lediglich Motorrad-Reifen, also Reifen für einspurige Fahrzeuge, haben diesen Zielkonflikt nicht: Diese müssen im hochfrequenten Rollkontakt so gut wie keine axial wirkenden Reaktionskräfte aufzunehmen und übertragen, da der Fahrer zur Kurvenfahrt die Maschine aus der Senkrechten so stark abwinkelt, dass die einwirkenden Kräfte faktisch wie Radialkräfte auf die seitlich abgerundeten Laufflächen des Reifens auftreffen. Die Seitenwände sind damit Teil der Lauffläche. Motorrad-Reifen haben deshalb auch eine deutlich unterschiedliche, stark gerundete Querschnittskontur, und rollen also nicht nur auf der Laufstreifen-Mitte, sondern je nach Verlauf der Kurve, auch auf der linken und der rechten Seitenwand. Infolge ihrer Geometrie und spezifischen Belastung bei Kurvenfahrt sind diese Reifen frei von Pendelschwingungen. Aus diesem Grunde brauchen Motorrad-Reifen zur Übertragung von aus Kurvenfahrten resultierenden Kräften auch keine extrem steifen Wulstfahnen bzw. Kernreiter oberhalb der beiden Kernringe. Die Erfindung betrifft daher nicht Reifen für solche einspurige Fahrzeuge.

EP-A-2 127 913 offenbart einen dem Oberbegriff des Anspruchs 1 enstprechenden Fahrzeugluftreifen.

Der Erfindung liegt daher die Aufgabe zugrunde, einen verbesserten Reifen zu schaffen.

Diese Aufgabe wird durch einen Reifen mit den Merkmalen des Hauptanspruchs gelöst. Vorteilhafte Ausgestaltungen der Erfindung sind Gegenstand der Unteransprüche.

Erfindungsgemäß wird daher vorgeschlagen, dass bei einem Fahrzeugreifen die Festigkeitsträger an der radinneren Seitenwand des Reifens eine größere Festigkeit, insbesondere größere Biegesteifigkeit, als die Festigkeitsträger an der radäußeren Seitenwand aufweisen, wobei an der radäußeren Seitenwand keine biegesteifen Festigkeitsträger vorgesehen sind.

Im Gegensatz zur aus dem Stand der Technik bekannten DE-A-1 680 456 ist erfindungsgemäß eine symmetrische Lauffläche, insbesondere der Karkasse-und Scheitelverstärkung bzw. Gürtelstruktur vorgesehen. Der Laufstreifen ist asymmetrisch. Daher hätte der Fachmann keine Veranlassung gehabt, die dort beschriebenen Festigkeitsträger an der radinneren Seitenwand des Reifens mit größerer Festigkeit als die Festigkeitsträger an der radäußeren Seitenwand vorzusehen.

Wenn die radinneren Festigkeitsträger mit den radäußeren Festigkeitsträgern in Relation im Sinn der Erfindung gesetzt werden, so sind darunter alle Maßnahmen und Merkmale zu verstehen, die die Seitensteifigkeit der Seitenwand, insbesondere in Richtung seitlich aus der Felge heraus, erhöhen. Also insbesondere die bewährten Kernreiter im Bereich der Reifenwulst. Festigkeitsträger können einzelne Bauteile, z. B. Kernreiter, aber auch veränderte festere Materialmischungen im Bereich der Wulst, des Wulstbereichs oder der Seitenwand sein. Der Reifen verfügt dabei natürlich auch über weitere Festigkeitsträger, die aber nicht asymmetrisch ausgelegt sein müssen, wie z. B. Kernringe, Karkasse, etc.

Die Begriffe Radinnenseite bzw. Radaußenseite beziehen sich auf die auf ein zweispuriges Fahrzeug aufgezogenen Felgen bzw. Reifen und sind wie allgemein üblich als "zum Fahrzeuginneren" bzw. "vom Fahrzeug weg" weisende Seiten zu verstehen.

Die erfindungsgemäße Lösung überwindet ein fast 100 Jahre altes Vorurteil der Fachwelt und verlässt die bislang angewandte Praxis axiale Kräfte durch zwei sich gegenüber befindliche und gegeneinander wirkende Kernreiter oder Wulstverstärkungen die formstabile Übertragung hoher Seitenkräfte zwischen Fahrbahn und Fahrzeug zu bewirken. Tatsächlich kann sich bei dieser Anordnung ohnehin immer nur die am radinneren Felgenhorn anliegende Reifenwulst gegen axiale Kräfte abstützen. Dagegen hat die radäußere Reifenwulst so gut wie keine Möglichkeit einen eigenen Anteil zur axialen Abstützung der Reifenschale beizutragen, da ihr das geeignete Lager fehlt! Insbesondere Untersuchungen mit asymmetrisch zur Radaußenseite vorgespannten Reifen haben gezeigt, dass die radäußeren Wulstverstärkungen so gut wie keinen stabilisierenden Beitrag zur Kraftübertragung leisten können. Der Vorschlag sieht daher für Auto-Reifen vor, dass zur Erzielung der gesuchten Stabilität gegen axial äußere Reaktionskräfte - wie z.B. bei Kurvenfahrt - jeweils nur die radinnere Seitenwand mit dem bekannten Kernreiter als Wulstverstärkung ausgerüstet wird. Dagegen erhält die radäußere Seitenwand einen schlanken Karkass-Umschlag - ähnlich wie beim Motorrad-Reifen, also ohne den sonst üblichen steifen Kernreiter - mit dem verblüffenden Ergebnis, dass derartige Reifen genauso gut Kurven durchfahren wie mit den Kernreitern auf jeder Seite, aber nun leichter und kostengünstiger sind, eine geringere Vertikalsteifigkeit aufweisen, komfortabler sind, und infolge der erheblich geringeren Gummireibung der radinneren Seitenwand auch signifikant geringere Antriebskräfte in Abfallwärme umwandeln - also den Rollwiderstand senken! In der einfachsten Ausgestaltung der Erfindung wird ein Reifen mit asymmetrischem Querschnitt der Festigkeitsstruktur (= Querschnitt) geschaffen, der unter Last die aus dem Stand der Technik bekannten Vorteile von Reifen mit radinneren Stützprofilen, z. B. DE 101 13 203 B4, zeigt.

Erfindungsgemäß können sogar die Festigkeitstrukturen, z. B. Kernreiter oder andere Wulstverstärkungen auf der radäußeren Seite sogar ganz wegfallen oder stark reduziert werden. Dies führ zu folgenden Vorteilen, die sogar auf beiden Seiten des oben erläuterten Zielkonflikts Vorteile mit sich bringen. Mit dem erfindungsgemäßen Reifen fällt also der 100 Jahre alte Zielkonflikt weg:
- Der fehlende Kernreiter auf der Radaußenseite erzeugt keine innere Gummireibung mehr. Dies senkt den Energieverbrauch. Es fällt weniger Reibungswärme an, die im Highspeed Bereich 100 °C überschreiten kann und zu Schäden an Karkasse, Kernreiter und der Gummiüberdeckung im Wulstbereich führen kann.
- Ferner erhöht sich der Komfort, da der Kernreiter nicht mehr der Einfederung im Weg steht. Kalte Kernreiter stehen der Einfederung besonders entgegen.
- Bei Reifen mit axialer Vorspannwirkung, z. B. mit einem asymmetrsichen Querschnitt, kann ein geringerer Aufwand für die radinneren Festigkeitsstruktur des Reifenquerschnitts betrieben werden, da deren Wirkung nicht mehr von den radäußeren Kernreitern behindert wird: Der radinneren Seitenwand steht nun bei der Abstützung gegen das Felgenhorn nicht mehr ein ihr "kontraproduktiv steif entgegen wirkender" Kernreiter der radäußeren Seitenwand gegenüber, sondern eine weich federnde Membrane.
- Auf der Radaußenseite sinken die Materialkosten und der Fertigungsaufwand.
- Die beschleunigte Radmasse sinkt und hat weniger Rotationsenergie.
- Der radinnere Kernreiter wirkt infolge der Asymmetrie wie ein Schwingungsdämpfer auf die Arbeit der Reifenschale, sodass störende Pendelschwingungen verhindert werden.

Die radäußere Seitenwand kann besonders weich und schlank relativ zu den aus dem Stand der Technik bekannten zeitgemäßen Reifen sein. Sie ist daher membranartig.

Üblicherweise gehören zur Festigkeitsstruktur von herkömmlichen Auto-Reifen die symmetrische Radial-Karkasse, zwei Kernringe als Fundament der Karkass-Umschläge, in denen je ein biegesteifer Kernreiter als einseitig eingespannter Kragträger eingebettet ist. Erfindungsgemäß erhält lediglich die radinnere Seitenwand einen biegesteifen Kernreiter, sodass die radäußere Seitenwand schon unter Innendruck stärker zur Radaußenseite ausbeult, Aufgrund dieser einseitigen "Kernreiter"-Anordnung, bzw. der daraus resultierenden asymmetrischen Verformungsmechanik gewinnen derartige Reifen ihre Eigenschafts-verbesserungen. Es wurde gefunden, dass "gefährliche" Pendelschwingungen des Reifens nur bei symmetrisch zwischen zwei als einseitig eingespannten (z. B. zwischen durch Felgenhorn und Hump) Kragtrögern (Kernreiter/Wulstkern als Teil der Festigkeitsstruktur) entstehen können. Beim Abriss des Reibkraftschlusses pendelt nämlich der Reifen nach dem Stand der Technik infolge der hohen Seitensteifigkeit der Gürtelstruktur wie ein Schwingungskörper zwischen zwei gleich starken Feder-Elementen (Kernreiter//Wulstkern) hin und her. Schwingt der im Fahrbahnbereich befindliche Reifen-Querschnitt zur Fahrzeugmitte, so schwingt im unbelasteten Umfang der gegenüberliegende unbelastete Reifen-Querschnitt zur Außenseite - bis sich die gegenläufigen Federkräfte etwa ausgeglichen haben. Tatsächlich wirkt dagegen der nur auf der Radinnenseite vorgesehene/verbliebene Wulstkern infolge seiner wirksamen Abstützung gegen das radinnere Felgenhorn wie ein "Schwingungsdämpfer" gegen alle von der Radaußenseite aufgezwungenen Verformungen des Reifens, denn die äußere, ohne Wulstkern hochelastische Seitenwand hat dagegen nur geringe Federkräfte gespeichert. Experimentelle Untersuchungen haben gezeigt, dass die Eigenschaftsverbesserungen umso größer sind, je dominanter die zur Radaußenseite gerichtete Vorspannkraft aus der Reifenschaien-Lagerung gegen das radinnere Felgenhorn ist.

Wenn die Festigkeitsträger derart sind, dass diese bei auf einer Felge eingebautem und unter betriebsüblichen Luftinnendruck stehenden Reifen sich in radialer Richtung von einem Bereich neben einem Felgenhorn der Felge zu einem radial nach außen weisenden Bereich, der nicht neben dem Felgenhorn liegt, erstrecken, erhöht sich die Stützwirkung gegen Lateralkräfte, die von der Radaußenseite bei der Kurvenfahrt angreifen. Besonders wirksam ist diese Ausführung bei asymmetrisch zur Radaußenseite vorgespannten Reifen, die aus dem Stand der Technik bekannt sind, da deren Eigenschaftsverbesserungen noch weiter deutlich verstärkt werden. Die fehlenden Festigkeitsträger auf der Radaußenseite behindern weniger die Wirkung der Festigkeitsträger an der Radinnenseite.

Wenn im Reifenwulst die Karkasse um die Kernringe und die Festigkeitsträger zusammen umgeschlagen ist, werden letztere zusammengehalten. Das gilt besonders, wenn das freie Ende der Karkasse dabei zwischen Felgenhorn und Festigkeitsträger (z. B. Kernreiter) verläuft und somit im Lastfall (Kurvenfahrt) zwischen diesen zusätzlich geklemmt und fixiert wird.

Vorzugsweise sind die Festigkeitsträger derart, dass diese, wenn der Reifen auf eine Felge montiert ist, die radinneren Seitenwand in Richtung der Felgenmitte bewegt wird, insbesondere wenn der Fahrzeugreifen unter Last steht. Das verbesserte Kurvenverhalten wird dadurch bewirkt. Besonders unter Last, d. h. dann, wenn auf den Reifen Vertikalkräfte wirken, z. B. durch Eigengewicht, Zuladung oder insbesondere Radlastschwankungen bei bei Kurvenfahrt auf den kurvenäußeren Seitenwänden der kurvenäußeren Reifen, findet eine Spurverbreiterung statt und die Größe der Aufstandfläche steigt.

Vorzugsweise wird vorgeschlagen, dass der im radinnere Wulstbereich als Kragträger wirkende Kernreiter auf Höhe des dort anliegenden Felgenhorns eine zum Felgenhorn gerichtete Ausformung erhält. Das daraus resultierende Drehmoment löst in äußerst wirksamer Weise eine Drehbewegung des Wulstbereichs um den darunter liegenden Kernring als Fundament der Karkasse aus. Der Fertigungsablauf kann nahezu unverändert bleiben, da lediglich der erfindungsgemäß veränderte Kernreiter statt des normalen eingesetzt wird. Diese gegebenenfalls auf der äußeren Seite zusätzlich verstärkte Ausführungsform zeichnet sich außerdem auch durch eine besonders fertigungsfreundliche Struktur aus, bei welcher z.B. der Wulstumschlag der Karkassenlage direkt zwischen Kernreiter und Felgenhorn "eingeklemmt" wird. Damit sind an dieser empfindlichen Stelle gefürchtete Relativbewegungen nicht mehr möglich.

Die am gattungsbildenden Stand der Technik beobachteten potentiellen Nachteile wurden in Praxistests nicht mehr beobachtet. Es wird vermutet, dass infolge der nunmehr weniger bzw. nicht mehr seitensteifen Radaußenseitenwand deren Walkarbeit, die auch auf die Festigkeitsträger der Radinnenseitenwand wirkt, reduziert wird. Durch die andersartige Verschiebung der Seitenwände, nämlich Verdrehung der Radinnenseitenwand um das Felgenhorn herum zur Felgemitte und Ausbauchung der Radaußenseitenwand, stellt sich infolge der Vorspannung vermutlich eine Änderung des unter Sturz laufenden Rades ein. Diese dynamisch bedingte Sturzänderung müsste sich im Verhältnis der nominal bedingten Radlast-Überhöhung einstellen. Der erfindungsgemäße Reifen ist nach der Montage auf den heute verwendeten Radfelgen unter Reifeninnendruck asymmetrisch gegen die von der Radaußenseite wirkenden Querkräfte vorgespannt und so im Vergleich zu den heute üblichen symmetrisch auf der Radfelge sitzenden Reifen auch infolge seiner aus der form- und kraftschlüssigen Abstützung des als Drucklager wirkenden erfindungsgemäß ausgebildeten Stützprofils direkt auf dem oberen Rand des üblichen Felgenhorns insgesamt deutlich geringer in Kraftrichtung verformt. Dies ergibt eine Verbesserung der Reifen-Gebrauchseigenschaften innerhalb der jeweils gegebenen Reifen-Dimensionen (z. B. 195/65R15) in den Kriterien Seitensteifigkeit (Geradeausstabilität - Kurvenfahrt - Bremsen), Abrieb, Rollwiderstand und Komfort. Die auf der Radinnenseite verlaufende Seitenwand des Reifens wird innerhalb der Höhe des üblichen Felgenhorns durch den erfindungsgemäß ausgebildeten versteiften Kernreiter in einem Winkel zwischen 5° und 20°, vorzugsweise zwischen 11° und 16°, zur Felgenmitte zu gekippt, ohne dass es in der Festigkeitsstruktur der Reifenseitenwand zu kritischen Druckspitzen oder unverträglichen Steifigkeitssprüngen kommt.

Da sich das neuartige Stützprofil auch auf dem oberen Rand des gegebenen Felgenhorns abstützt, vergrößert sich somit auch die Anlagefläche des Reifenfußes in der Felge entsprechend vorteilhaft und ein Durchrutschen gegen die Felge wird erschwert. Hierdurch wird der Reifen, der in seiner sonstigen Festigkeitsstruktur unverändert bleiben kann, unter Reifeninnendruck zwangsläufig vorteilhaft vorgespannt. Der vorgespannte, sich nun mit-einer hohen Pressung gegen das innere Felgenhorn (bis auf dessen oberen Rand) des Rades abstützende Reifen ist zwar in seiner vertikalen Einfederung nicht behindert, da er der vorgegebenen lateralen Vorspannrichtung folgt - also seitlich zur Reifenaußenseite ausweichen kann. Jedoch überträgt er die auf ihn einwirkenden Querkräfte spontaner, was sich im Lenkgefühl (straff, mit gutem Center point feeling) und Lenkverhalten (kleinerer Lenkwinkel) positiv bemerkbar macht. Gleichzeitig kann der Reifen mit der erfindungsgemäßen Ausbildung des auf der Innenseite des Rades verlaufenden Reifenfußes durch die wirksame vorgespannte Abstützung die seitliche Verformung erheblich reduzieren, sodass auch höhere Seitenkräfte übertragen werden können. Durch das als form- und kraftschlüssiges Drucklager ausgebildete "Stützprofil" vergrößert sich an dieser Stelle auch die Reibfläche des Reifens in Bezug auf den sicheren tangentialen Sitz des Reifens auf der Radfelge, sodass auch die Gefahr von auf der Felge durchrutschenden Reifen (beim Bremsen oder Beschleunigen) vorteilhaft verringert wird. Mit dem erfindungsgemäßen Vorschlag kann die Festigkeitsstruktur des Reifens im unmontierten und drucklosen Zustand auch weiterhin symmetrisch ausgeführt sein. Die vorspannende Wirkung wird ursächlich durch die neuartige äußere Kontur des Stützprofils an einer der beiden Reifenseitenwände auf Höhe des inneren Felgenhorns erzeugt, insbesondere bei Reifeninnendruck.

Der verwendete Reifen könnte darüber hinaus zur weiteren Unterstützung der gesuchte Stabilitätsverbesserung gegen die von der Kurvenaußenseite wirkenden Störkräfte auch in den übrigen Teilen seiner Konstruktion unsymmetrisch ausgelegt werden.

Wenn der Kernreiter aus unterschiedlich festen, insbesondere unterschiedlich druckfesten Werkstoffen besteht, kann der für die unterschiedlichen Funktionsabschnitte des Reiters optimale Werkstoff bzw. Eigenschaft ausgewählt werden. Z. B. wenn der Kernreiter Zonen unterschiedlicher Festigkeit aufweist, wobei vorzugsweise die zum Felgenhorn gerichtete Ausformung eine andere, vorzugsweise höhere, Festigkeit als der übrige Kernreiter aufweist, kann einerseits ein zum Abstützen optimaler Werkstoff ausgewählt werden, während der übrige Kernreiter aus dem bewähren Zusammensetzung besteht. Unterschiedliche Festigkeit kann beispielsweise durch unterschiedliche Shorehärte und/oder Druckfestigkeit gegeben sein.

Alternativ kann der Festigkeitsträger an der Radinnenseite auch ohne den modifizierten Kernreiter auch wie folgt gelöst werden: Es wird ein ringförmiges asymmetrisches Stützprofil vorgeschlagen, welches einerseits in Lateralrichtung und Umfangsrichtung hochfest bzw. hochdrucksteif ist, in Radialrichtung jedoch flexibel, und dessen dem Reifenfuß zugewandte Stützfläche unter Luftdruck ein zur Radmitte gerichtetes Drehmoment des Reifenwulstes um den im Felgensitz befindlichen Kernring auslöst. Durch die auf die ursprüngliche Biege bzw. Drehbewegung des Wulstbereichs (um den Kernring) ausgelegte abstützende Anordnung des Stützprofils zu dem nach außengerichteten Radius des Felgenhorns wird der anliegende Wulstbereich bezüglich seiner Verformbarkeit hochwirksam entlastet, was sich nicht nur im fahrdynamischen Verhalten, sondern auch maßgeblich über dessen reduzierte, energiezehrende Verformung im Rollwiderstandsverlust bemerkbar macht. Infolge der optimierten Abstützung "gegen und auf" das Felgenhorn wird die Walkarbeit der unter dynamisch überhöhten Radlasten und Seitenkräften stehenden Reifen vorteilhaft reduziert. In vergleichenden Reifenmessungen konnte nachgewiesen werden, dass die vom erfindungsgemäßen Stützprofil erzeugte asymmetrische Verschiebung der Reifenschale mit ihren inneren und äußeren Reifenseitenwänden zu einer Reduzierung der Vertikalsteifigkeit führt.

Hochfeste Zugmittel im Sinn der Erfindung sind solche Materialien, die im Fahrbetrieb ein Vergrößern des Umfangs des Stützprofils verhindern, welches zu einem Rutschen über das Felgenhorn führen würden. Ein flexibles Material im Sinn der Erfindung ist flexibel genug, um ovalisiert zu werden, ermöglicht also ein Aufziehen auf die Felge zusammen mit dem Reifen, d. h. ein Aufziehen der Einheit Reifen-Stützprofil. Nicht ovolisierbar wäre z. B. ein steifer Metallring, da diese nur mit ganz erheblichen, im Reifenwerkstattbetrieb unüblichen Kräften aufgezogen werden könnte. Anderseits ist im Sinn der Erfindung das flexible Material drucksteif genug, um die gewünschte Vorspannung erzeugen zu können.

Eine derartige Lösung hätte mehrere Vorteile: Flexible, aber druck- und zugfeste Stützprofile, beispielsweise mit einer hochzugfesten Draht - oder Aramid Wicklung, können an den Reifenkörper anvulkanisiert werden. Da diese hinreichend ovalisierbar sind, entstehen keine Probleme bei der Reifenmontage. Die Anvulkanisation könnte vorzugsweise unmittelbar nach dem Ausformen des Reifenkörpers unter Ausnutzung der hohen Prozesswärme erfolgen, oder auch später.Es wird also vorgeschlagen, dass alternativ zur integralen Fertigung von Reifenschale und Stützprofil, beide Elemente auch getrennt vulkanisiert werden können, und vorzugsweise unter Ausnutzung der nach Ausformung der Reifenschale noch verfügbaren Prozesswärme (bis zu 160°) das Stützprofil werkzeuggestützt und kraftschlüssig am radinneren Reifenfuß anzubinden (z.B. durch Vulkanisation, oder Kleben).

Es wurde erkannt, dass radäußere Wulstverstärkung als einseitig eingespannter Kragträger überflüssig ist und ihre angenommene Funktion als stabilisierendes Element der Reifenschale gegen axial auftretende Störkräfte nicht besitzt. Es wird deshalb vorgeschlagen, auf die radäußere Wulstverstdrkung zu verzichten, und die äußere Seitenwand komplett als weich federnde Membrane auszulegen. Dies wird möglich, da die am radinneren Felgenhorn erfolgende Abstützung/Vorspannung der Reifenschale die auftretenden Seitenkräfte ableitet. Daher wird die Reifenschale "weicher einfedern" (Komfort-Verbesserung), und "weniger innere Reibung" (Rollwiderstand) erzeugen.

In einer verbesserten Ausführungsform wird vorgeschlagen, die radäußere Seitenwand im Wechsel mit konzentrisch verlaufenden "Biegefugen" und "Scheuerringen" auszuführen. Während die mit ausreichend großen Radien verlaufenden "Biegefugen" unter wechselnden Radlasten besonders weich und energiearm einfedern, können die robusten "Scheuerleisten" mechanische Beanspruchungen der biegeweichen Seitenwand sicher abfedern. Wesentlich ist hier, dass diese Leisten keine oder sehr geringe Biegesteifigkeit im Verhältnis zu den radinneren Festigkeitsträgern aufweisen.

Wenn die Karkasse in den beiden Seitenwände sich radial über die gleiche Länge erstreckt, ist sichergestellt, dass sich unter Reifeninnendruck der gewünschte asymmetrische Querschnitt sowie die gewünschte Druckverteilung in der Gürtelplatte ergibt.

Weitere Vorteile ergeben sich aus der folgenden Beschreibung und der beigefügten Zeichnung. Ebenso können die vorstehend genannten und noch weiter ausgeführten Merkmale erfindungsgemäß jeweils einzeln oder in beliebigen Kombinationen miteinander verwendet werden. Die erwähnten Ausführungsbeispiele sind nicht abschließend zu verstehen und haben beispielhaften Charakter. Dabei zeigt
- Fig. 1: die erste Lösung der Aufgabe;
- Fig. 2: eine alternative Lösung;
- Fig. 3-5: im Allgemeinen die Auswirkungen eines asymmetrisch geformten oder mit asymmetrischer Festigkeitsverteilung ausgestalteten Reifens; und
- Fig. 6: das Kurvenverhalten des erfindungsgemäß Reifens.

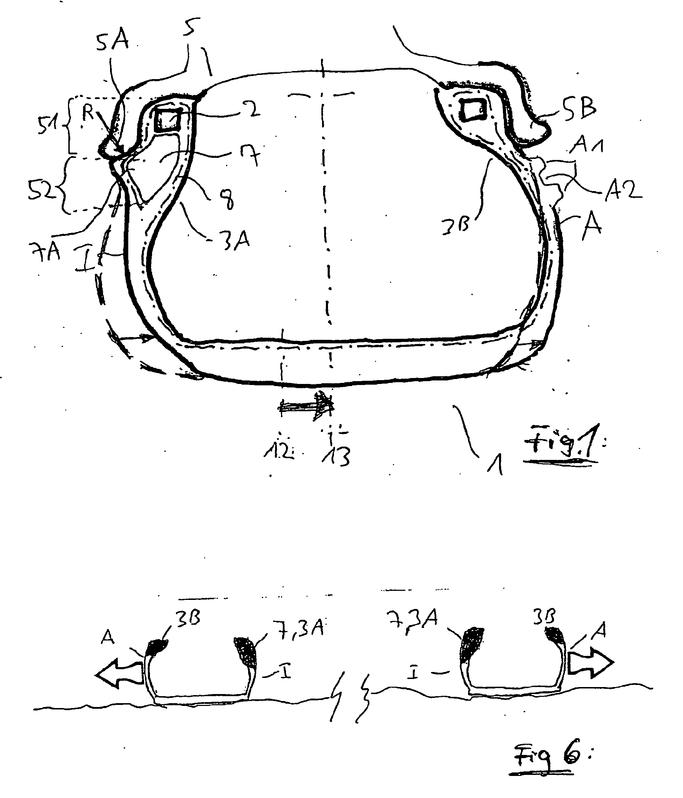

Fig. 1 stellt gestrichelt die symmetrische Außenkontur eines unter Reifeninnendruck auf einer üblichen Radfelge 5 gespannten, aber noch unbelasteten, also unverformten üblichen Reifens 1 ohne erfindungsgemäß mit höherer Festigkeit versehenen Festigkeitsträgern nur an der inneren Reifenseitenwand I dar, so wie er sich in seinem statischen Gleichgewichtszustand befindet. In diese Konfiguration ist die erfindungsgemäß bewirkte asymmetrische Außenkontur (dargestellter Reifen) eines nahezu baugleichen Reifens überlagert, die sich bei erfindungsgemäßer Ausführung des an der dem Felgenhorn 5A auf der radinneren Seitenwand I mit den festeren Festigkeitsträger 7 ergibt. Der erfindungsgemäße Reifen verläuft nun mechanisch verschoben unsymmetrisch in Relation zur Mittelachse 12 der gebräuchlichen Radfelge, sodass sich die Laufstreifenmitte 13 um dieses Maß zur Radaußenseite A verlagert hat. Die erfindungsgemäß festeren Festigkeitsträger befinden sich also stets an der Radinnenseite, ebenso das dieses gegenstützende Felgenhorn 5A.

Im Einzelnen zeigt die Fig. 1 den nicht vollständigen Querschnitt eines in weiten Teilen bekannten Reifens 1 , der mit seinen durch Kernringe 2 und Kernreiter 7 verstärkten Reifenwülsten 3A, 3B, die radial nach außen verlaufende biegesteife Wulstverstärkungen 3 bilden und an den Felgenhörnern 5A, 5B einer Radfelge 5 anliegen. Jedoch zeigt die Fig. 1 die Besonderheit des erfindungsgemäßen Reifens, nämlich dass die Festigkeitsträger 7 an der radinneren Seitenwand I des Reifens 1 eine größere Festigkeit, insbesondere größere Biegesteifigkeit, als die Festigkeitsträger an der radäußeren Seitenwand A aufweisen, wobei vorliegend sogar keine Festigkeitsträger an der radäußeren Seitenwand (A) vorgesehen sind. Die biege- und drucksteifen Festigkeitsträger 7, 7a an der radinneren Seitenwand I stützen sich formschlüssig gegen und auf dem radinneren Felgenhorn 5A ab, so dass die Seitenwände I, A des luftgefüllten Reifens nun kraftschlüssig in eine neue Querschnittskontur asymmetrisch zur Radaußenseite verschoben sind(siehe Pfeil von 12 nach 13). Hierdurch verlagert sich auch schon im unbelasteten Zustand die Mittelachse des Laufstreifens relativ zur Mittelachse der Radfelge weiter zur Radaußenseite. Diese Wirkung verstärkt sich aber unter vertikaler Einfederung des belasteten Reifens noch etwas. Erfindungsgemäß weist der Kernreiter 7 auf Höhe des dort anliegenden Felgenhorns 5A eine zu diesem Felgenhorn gerichtete Ausformung 7A auf. Diese gibt dem Material, also der Karkasse 8 und dem äußeren Gummimantel, welches ohnehin an dieser Stelle des Reifens vorgesehen ist, die stützende Form, so dass keine seitliche (externe) Anformung an die Seitenwand des Reifens mehr nötig ist, wie sie im Stand der Technik DE 101 13 203 B4 beschrieben ist. Der Wulstumschlag der Karkassenlage 8 ist um die Ausformung 7A des Kernreiters 7 und den Kernring 2 geführt und daher direkt zwischen Ausformung 7b und Felgenhorn 5a eingeklemmt. Der Kernreiter 7, 7A ist als Teil der Wulstzone auf Höhe des dort anliegenden Felgenhorns 5A ausgebildet und weist eine zum Felgenhorn gerichtete Ausformung 7A auf zur Bildung des Stützprofils und schafft somit eine drehsteife Lagerung und Abstützung des am radinneren Felgenhorn anliegenden Reifenwulst/Reifenfuß.

Die durch die asymmetrische Festigkeitsverteilung ausgelöste seitliche Verschiebung der Reifenseitenwände erzeugt die gesuchte unsymmetrische Vorspannung einer z. B. im drucklosen und unbelasteten Zustand symmetrischen Reifenschale.

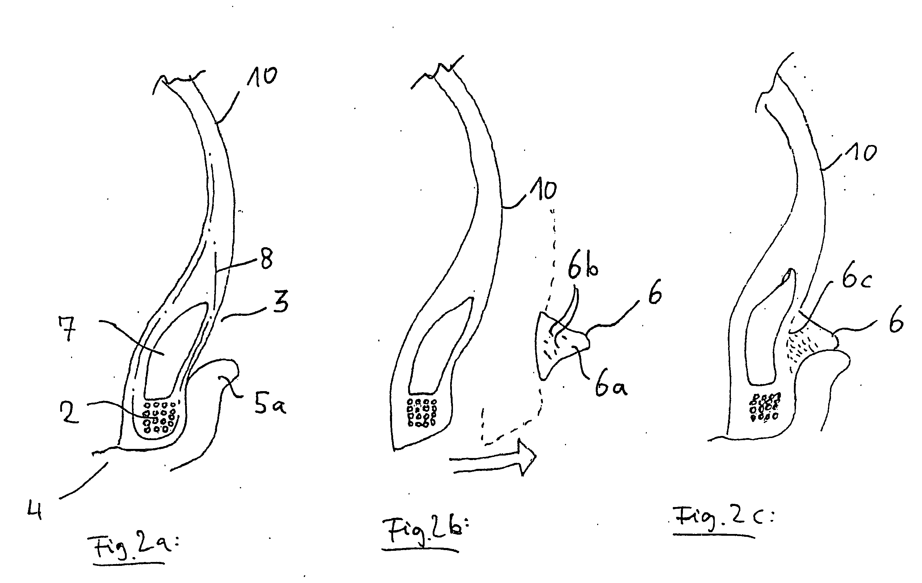

Die radinnere Radwulst 3A liegt in dem Kontaktbereich mit dem oberen Rand des Felgenhorns 5A an diesem an. Das Felgenhorn 5A hat dabei einen bestimmten Radius R in diesem Kontaktbereich, der bei üblichen Fahrzeugreifen, insbesondere PKW Reifen, bei R=9,6 mm liegt. Es wurde festgestellt, dass die Fahreigenschaften sich verbessern, wenn die radinnere Reifenwulst in dem genannten Kontaktbereich einen Radius aufweist, der kleiner als der Felgenhornradius R ist. Der Radius des Stützprofil beträgt dabei vorzugsweise 9,0 - 9,59 mm und insbesondere vorzugsweise 9,4-9,55 mm. Ferner wird ein unter allen Betriebsbedingungen optimaler Sitz gesichert. Diese Werte für den Radius des Stützprofil gelten auch für die alternative Ausgestaltung gemäß Fig. 2

Der bekannte Reifen nimmt im Querschnitt mit dem äußeren Laufstreifen 15 eine symmetrische Gleichgewichtskontur ein. Dabei liegt die Mittelachse 12 des Reifenlaufstreifens etwa auf der Mittelachse des Felgenbettes. Der Wulstumschlag der Karkassenlage 8 ist um den Kernreiter 7 und den Kernring 2 gefaltet.

Fig. 2a stellt den radinneren Reifenfuß 2, 7, 8, 3 vor der Überholung auf der Felge 5 ohne Stützprofil 6 dar. Der nicht-vollständige Querschnitt des bekannten Reifens 1 liegt mit seinen durch Kernringe 2 und Kernreiter 7 als Festigkeitsträger verstärkten Reifenfüßen, die radial nach außen verlaufende biegesteife Wulstverstärkungen 3 bilden, an dem Felgenhorn 5A einer Radfelge 5 an. Der Wulstumschlag der Karkassenlage 8 ist um den Kernreiter 7 und den Kernring 2 gefaltet.

Bei der Überholung in Fig. 2b wird das erfindungsgemäße ringförmige Stützprofil 6 in Höhe des Felgenhorns 5a an die Reifensseitenwand 10 anvulkanisiert. Dieses umfasst ein flexibles, aber hinreichend druckfestes Material 6a und Wicklungen 6b aus hinreichend zugfestem Material. Das druckfeste Material 6a kann beispielsweise durch eingemischte druckfeste Partikel gebildet werden, z. B. hochfester Kunststoff, Metallspäne oder-körper, die auch optional als in Kraftrichtung orientierte Verstärkungseinlagen ausgebildet sein können.

Danach zeigt die Fig. 2c das erfindungsgemäß entlang der Fügelinie 6c anvulkanisierte drucksteife Stützprofil 6 das sich formschlüssig gegen und auf dem inneren Felgenhorn 5a abstützt, und die Seitenwände des luftgefüllten Reifen nun kraftschlüssig in eine neue Querschnittskontur asymmetrisch zur Radaußenseite verschiebt. Der Reifen erfährt dadurch die unter Fig. 1 beschriebene Vorspannung.

Das Stützprofil kann auch separat vorliegen, z. B. aus Aluminium und einfach zwischen Seitenwand und Felgenhorn geklemmt werden. Er hat eine Form wie das Stützprofil 6.

Der nicht in Fig. 2 dargestellte radäußere Reifenfuß ist wie in Fig. 1 ohne oder mit weniger festen Festigkeitsträgern ausgestattet.

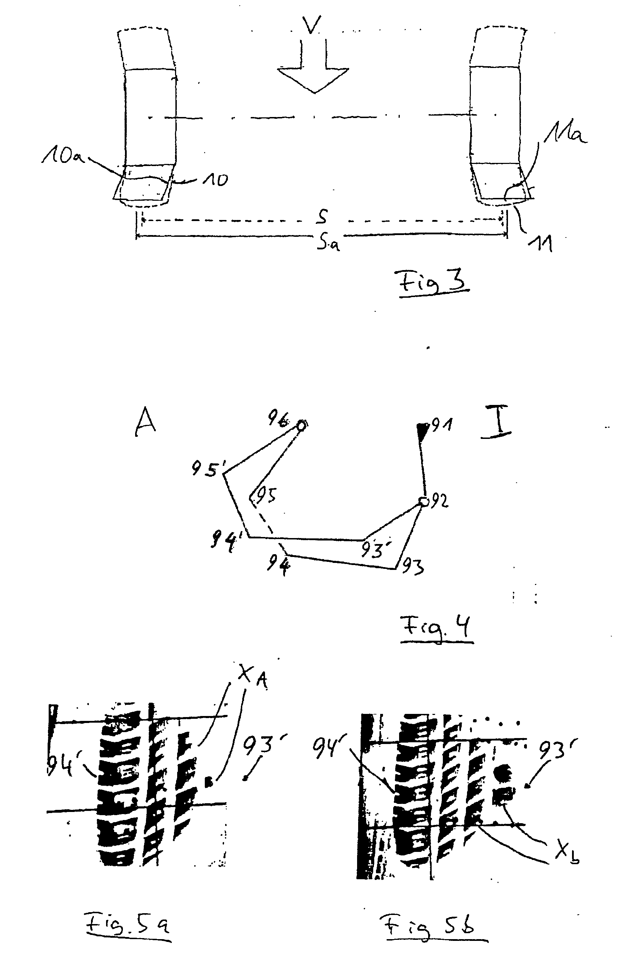

Die folgenden Fig. 3-5 zeigen im Allgemeinen die Auswirkungen eines asymmetrisch geformten oder mit asymmetrischer Festigkeitsverteilung ausgestalteten Reifens.

Dabei zeigt Fig. 3 , dass bei einem Fahrzeug die durch die seitliche Ausformung unter Reifeninnendruck eingeleitete und zur Radaußenseite gerichtete Verschiebung des Reifenquerschnitts 11 im Kontaktbereich zur Fahrbahn durch die im Rollkontakt einwirkenden vertikalen Radlasten V vorteilhaft verstärkt wird. Deren Wirkung auf die jeweils nach außen und somit spurverbreiternd (von S zu Sa) verschobenen Reifenseitenwände 10, 10a bzw. des Reifenquerschnitts 1 1 , 11a geht in die gleiche Richtung und verstärkt die Schrägstellung, wobei mit Bezugszeichen 10a bzw. 1 1 a die Stellung der Seitenwand bzw. des Reifenquerschnitts unter zusätzlicher Vertikallast V bezeichnet ist. Beim Fahrzeug ergibt sich somit eine stabilisierende Spurverbreiterung (von S zu Sa), die unter weiterer Vertikallast sogar zunimmt. Der Reifen ist also derart ausgestaltet, dass unter Vertikallast die radinnere Reifenseitenwand der lateralen Verformung folgend weiter in Richtung Felgenmitte einfedern kann, insbesondere so dass eine Spurverbreiterung bewirkt wird. Gleichzeitig wird dieser Kinematik folgend die vertikale Steifigkeit fahrkomfortsteigernd reduziert.

Fig. 4 erläutert die in Richtung zur Radaußenseite A gerichtete Vorspannung durch das Stützprofil an der Radinnenseite I: 91-96: Die Bezugszeichen 1-6 bezeichnen die charakteristischen Punkte der Reifenschale unter Luftinnendruck im unbelasteten, d. h. von der Fahrbahn abgehobenen, Zustand, während die Bezugszeichen 93'- 95'- die davon abweichenden Punkte im belasteten Zustand kennzeichnen. Dabei bedeutet
91: drehsteife Lagerung des radinneren Reifenfußes
92: Haltepunkt für die oberen Reifenschale
93: radinnere Gürtelschulter
94: radäußere Gürtelschulter
95: radäußeres Seitenwand-Gelenk
96: gelenkige Lagerung des radäußeren Reifenfußes

Die in Richtung zur Radaußenseite A gerichtete Vorspannung der Reifenschale durch das Stützprofil 91,92 führt bei vertikaler Einfederung, also unter Last, infolge der vorgegebenen lateralen Verformung, zur nach Außen A gerichteten Ausweichbewegung der Gürtelplatte bzw. Aufstandsfläche 93-94. Dabei ist vor allem zu erkennen, dass der Reifen derart ausgebildet ist, dass im unbelasteten Zustand die radinnere Gürtelschulter 93 weiter von der Drehachse des Reifens entfernt ist, als die radäußere Gürtelschulter 94. Erst beim Aufstellen auf den Untergrund im belasteten Zustand, sind die radinnere Gürtelschulter 93' und radäußere Gürtelschulter 94' durch die Einfederung der membranartigen Seitenwände 92 - 93' wieder gleich weit von der Drehachse des Reifens entfernt. Dies führt dazu, dass die radinnere Gürtelschulter 93' bei Kurvenfahrt in Richtung Radinneres I länger den Kontakt mit der Fahrbahn halten kann, als dies mit konventionellen Reifen möglich wäre. Es ist daher bevorzugt, dass die radinnere Lauffläche des Reifens als Folge der axialen Verschiebung einen größeren Umfang, vorzugsweise 0,2-1 % mehr Umfang, als die radäußere Lauffläche des Reifens aufweist. Bei üblichen PKW Reifen macht dies ca. 2 - 6 mm Umfangsunterschied aus.

In der Kurvenfahrt wird somit erreicht, dass bei zunehmendem Sturzwinkel infolge der zunehmenden Seitenkraft die zunehmende Winkeländerung der Aufstandsfläche zur Senkrechten durch das Aufrichten der inneren Seitenwand kompensiert wird. Bei Kurvenfahrt nach Rechts in Fig. 4 würde sich die radinnere Gürteischulter 93' infolge der nach rechts wirkenden Seitenkräfte nach rechts bewegen und dabei würde sich das Segment 92-93' steiler aufstellen, Im Ergebnis wird die radinnere Gürtelschulter 93' nach unten in Richtung Fahrbahn gedrückt, was den Fahrbahnkontakt verbessert.

Diese Wirkung belegen Versuche, wie in Fig 5a und 5b dargestellt, Es handelt sich um die gemessenen Aufstandsflächen eines linken Fahrzeugreifens in einer Rechtskurve. Links ist somit die radäußere Gürtelschulter 94' zu erkennen. Beim konventionellen Reifen in Fig. 5a hebt aber die radinnere Gürteischulter 93' ab, weshalb die radinneren Profilstollen Xa kaum Kontakt mit der Fahrbahn haben. Der erfindungsgemäße Reifen in Fig. 5b zeigt dagegen, dass sogar weite Teile der radinneren Gürtelschulter 93' und radinneren Profilstollen Xb Fahrbahnkontakt haben. Auch fällt hier die Profilkontendeformation am radäußeren Profilstollen 94' geringer aus.

Fig. 6 erläutert das Deformationsverhalten von zwei Rädern einer Achse, deren radinnere Seitenwände I biegesteife Kernreiter 7 aufweisen, nicht jedoch auf der radäußeren Seite A. Diese Seitenwände A sind nämlich ohne Kernreiter als biegeweiche Membranen ausgebildet. Unter Einfederung verformen sich die Reifenquerschnitte jeweils zu der Seitenwand A, die den geringsten Widerstand gegen Verformung leistet, also jeweils nach Außen. Damit zentrieren sich beide Räder zwangsläufig, was insbesondere beim Bremsen für sicherheitsrelevante Stabilität und Bremswegverkürzung sorgt. In Foto- bzw. Videoanalysen ist zu erkennen, dass die radäußeren Seitenwände A wie die am radäußeren Felgenhorn anliegende Seitenwand-Wulstzone 3B herkömmlicher Reifen bei Kurvenfahrt zur Fahrzeugmitte hin verzerrt wird und sie somit nicht an der Seitenkraft-Übertragung teilnehmen kann. Infolge der asymmetrischen Wulstkern-Ausbildung 3A, 3B in den beiden Reifenseitenwänden erhält der Reifen nun eine dem bestehenden Zielkonflikt "Seitenführung / Einfederung" (Handling / Komfort) eine optimale Festigkeitsstruktur in einer seiner beiden Seitenwände, nämlich der radinneren Seitenwand I einen biegesteifen Kernreiter 7, der sich aufgrund seiner Einspannung im radinneren Felgensitz nun unmittelbar gegen alle äußeren Seitenkräfte am metallischen Felgenhorn abstützen kann. Die jeweils am radäußeren Felgenhorn angeordnete Seitenwand A wird dagegen so ausgelegt, dass der Karkass-Umschlag zwar sicher verankert ist, aber keine weiteren Einlagen - neben dem notwendigen Kernring - enthält, die einer möglichst elastischen vertikalen Einfederung entgegenwirken. Im Rollbetrieb ergeben sich nun für Reifen einer Achse zwangsläufig jeweils zur Radaußenseite gerichtete asymmetrische Verformungen der Reifenschalen, sodass sich diese Reifen unter Last selbst "zentrieren", und außerdem als Schwingungsdämpfer im System wirken.

## Patentansprüche

1. Fahrzeugluftreifen (1) für ein mehrspuriges Fahrzeug, mit Reifenwülsten (3A, 3B), an einer radinneren Seitenwand (1) und an einer radäußeren Seitenwand (A) des Reifens, welche eine um Kernringe (2A, 2B) umgeschlagene Karkasse (8) aufweisen,
**dadurch gekennzeichnet, dass**
Festigkeitsträger, nämlich ein Kernreiter (7) an der radinneren Seitenwand (1) des Reifens (1) vorgesehen sind, und
an der radäußeren Seitenwand (A) keine Festigkeitsträger, nämlich Kernreiter, vorgesehen sind, so dass die radinnere Seitenwand (1) eine größere Seitenstelfigkeit in Richtung seitlich aus der Felge heraus als die radäußere Seitenwand (A) aufweist.

2. Reifen nach einem der vorherigen Ansprüche, **dadurch gekennzeichnet, dass** beim nicht unter betriebsüblichen Luftinnendruck stehenden Reifen der Laufstreifen des Reifens symmetrisch zur Reifenäquatorialebene ausgebildet ist und/oder derart ausgebildet Ist, dass er keine Abdrift relativ zur Reifenäquatorialebene erzeugt.

3. Reifen nach einem der vorherigen Ansprüche, wobei die Festigkeitsträger (7) derart sind, dass diese bei auf einer Felge (5) eingebautem und unter betriebsüblichen Luftinnendruck stehenden Reifen sich in radialer Richtung von einem Bereich (51) neben einem Felgenhorn (5A) der Felge (5) zu einem radial nach außen weisenden Bereich (52), der nicht neben dem Felgenhorn (5A) liegt, erstrecken.

4. Reifen nach einem der vorherigen Ansprüche, wobei die Kernreiter aus festen Werkstoffen, insbesondere Hartgummi, Kunststoffen oder Metallen, bestehen.

5. Reifen nach einem der vorherigen Ansprüche, wobei in der einen Reifenwulst (3A) die Karkasse (8) um die Kernringe (2) und die Festigkeitsträger (7) zusammen umgeschlagen ist.

6. Reifen nach einem der vorherigen Ansprüche, wobei die Festigkeitsträger (7) derart sind, dass, wenn der Reifen auf eine Felge (5) montiert ist, die radinneren Seitenwand (1) lateral in Richtung der Felgenmitte bewegt wird, insbesondere wenn der Fahrzeugreifen unter Last steht.

7. Reifen nach einem der vorherigen Ansprüche, wobei wenn der Reifen auf einer Felge (5) montiert ist, ein druckfestes Stützprofil (7A) mit den Festigkeitsträgern (7) an der radinneren Seitenwand (1) auf Höhe des dort anliegenden Felgenhorns (5A) verbunden ist, welches die radinneren Seitenwand (1) lateral in Richtung der Felgenmitte bewegen kann, wobei vorzugsweise der Kernreiter auf Höhe des dort anliegenden Felgenhorns (5A) eine zum Felgenhorn gerichtete Ausformung (7A) aufweist zur Bildung des Stützprofils.

8. Reifen nach einem der vorherigen Ansprüche, wobei wenn der Reifen auf einer Felge (5) montiert ist, ein druckfestes Stützprofil (6) an der radinneren Seitenwand (1) auf Höhe des dort anliegenden Felgenhorns (5A) verbunden ist, welches die radinneren Seitenwand (1) lateral in Richtung der Felgenmitte bewegen kann; vorzugsweise mit in Umfangsrichtung hochfesten Zugmitteln, welche in Radialrichtung flexibel ist, wobei das Stützprofil an die Außenwand der radinneren Seitenwand (1) gefügt ist, Insbesondere durch Verkleben oder Vulkanisieren, wobei vorzugsweise als Zugmittel hochzugfester Draht oder Aramid vorgesehen ist, insbesondere In Form von in Umfangsrichtung verlaufenden Wicklungen und/oder als flexibles Material Gummi, insbesondere mit einer Shore Härte von mindestens 60 vorgesehen ist.

9. Reifen noch einem der vorherigen Ansprüche, mit einem separatem Ring als druckfestes Stützprofil an der radinneren Seitenwand (1) auf Höhe des dort anliegenden Felgenhorns (5A), derart, dass wenn der Reifen auf eine Felge (5) montiert ist, dieser zwischen der radinneren Seitenwand (1) und dem Felgenhorn (5A) geklemmt ist um die radinneren Seitenwand (1) lateral in Richtung der Felgenmitte zu bewegen.

10. Reifen nach einem der vorherigen Ansprüche, **dadurch gekennzeichnet, dass** der Reifenwulst (3A) an der radinneren Seitenwand (1) biegesteif ist.

11. Reifen nach einem der vorherigen Ansprüche, **dadurch gekennzeichnet, dass** beide Reifenseltenwände (A, 1) durch das Festigkeitsverhältnis des Festigkeitsträgers (7) der radinneren Seitenwand (1) zum Festigkeitsträger der radäußeren Seitenwand (A) gleichsinnig bewegbar sind, so dass der Reifenkörper in lateraler Kraftrichtung gegen äußere Reaktionskräfte vorgespannt werden kann in Richtung der Reifenaußenseite (A).

12. Reifen nach einem der vorherigen Ansprüche, **dadurch gekennzeichnet, dass** die Festigkeitsträger (7) derart ausgebildet sind, dass die biegestelfe Reifenwulst (3A) des auf der Felge montierten und unter betriebsüblichem Luftinnendruck stehenden Reifens (1) zwischen 5° und 30°, vorzugsweise zwischen 15° und 25°, aus der Senkrechten zum Felgeneckpunkt in Richtung der Felgenmitte kippbar ist, sodass der Reifen einen asymmetrischen Querschnitt erhält.

13. Reifen nach einem der vorherigen Ansprüche, wobei die radäußere Seitenwand (A) biegeweiche Verstärkungen (A1) aufweisen, insbesondere einen konzentrisch zur Reifendrehachse verlaufenden Scheuerring (A1), ferner vorzugsweise mehrere konzentrisch im Wechsel angeordnete konzentrisch verlaufende Biegefugen (A2) und Scheuerringe (A1).

## Claims

1. Pneumatic vehicle tyre (1) for a multi-track vehicle having tyre beads (3A, 3B) at a side wall (1) which is inside of the wheel and at a side wall (A) which is outside of the wheel of the tyre, which are provided with a carcass (8) folded around core rings (2A, 2B),
**characterized in that**
reinforcing supports, namely an apex (7) at the side wall (I) which is inside of the wheel of the tyre (1), are provided and
no reinforcing supports, namely apexes, are provided at the side wall (A) which is outside of the wheel so that the side wall (I) which is inside of the wheel exhibits a higher lateral rigidity in the direction laterally out of the rim than the side wall (A) which is outside of the wheel,

2. Tyre according to the previous claims, **characterized in that** the tread of the tyre is symmetrical to the equatorial plane of the tyre, the tyre not having a customary operating internal air pressure and/or is designed in such a manner that it does not produce a drift relative to the equatorial plane of the tyre.

3. Tyre according to one of the previous claims, wherein the reinforcing supports (7) are designed in such a manner that they extend from a portion (51) adjacent to a rim flange (5A) of the rim (5) to a radially outwardly facing portion (52) which is not adjacent to the rim flange (5A), the tyre being mounted to a rim (5) and having a customary operating internal air pressure.

4. Tyre according to one of the previous claims, wherein the apexes consist of firm materials, in particular hard rubber, plastics or metals.

5. Tyre according to one of the previous claims, wherein in one of the tyre beads (3A) the carcass (8) is folded around both the core rings (2) and the reinforcing supports (7),

6. Tyre according to one of the previous claims, wherein the reinforcing supports are designed in such a manner that, if the tyre is mounted on a rim (5), the side wall (1) which is inside of the wheel is laterally moved in the direction of the middle of the rim, in particular if the vehicle tyre is under load.

7. Tyre according to one of the previous claims, wherein, if the tyre is mounted on a rim (5), a pressure resistant support profile (7A) is linked to the reinforcing supports (7) at the side wall (I) which is inside of the wheel at the level of the attached rim flange (5A) which is able to laterally move the side wall (I) which is inside of the wheel in the direction of the middle of the rim, wherein preferably the apex is provided with a formation (7A) directed to the rim flange at the level of the attached rim flange (5A) for forming the support profile.

8. Tyre according to one of the previous claims, wherein, if the tyre is mounted on a rim (5), a pressure resistant support profile (6) is linked to the side wall (I) which is inside of the wheel at the level of the attached rim flange (5A) which is able to laterally move the side wall (I) which is inside of the wheel in the direction of the middle of the rim; preferably via tension elements which are of high-strength in the peripheral direction and flexible in radial direction, wherein the support profile is joint to the exterior wall of the side wall (I) which is inside of the wheel, in particular via sticking or vulcanization, wherein as tension element a high tensile wire or aramid is preferably provided, in particular in the form of windings passing in the peripheral direction and/or as flexible material rubber, in particular having a shore hardness of at least 60.

9. Tyre according to one of the previous claims having a separate ring as the pressure resistant support profile at the side wall (I) which is inside of the wheel at the level of the attached rim flange (5A) in such a manner that, if the tyre is mounted on a rim (5), it is clamped between the side wall (I) which is inside of the wheel and the rim flange (5A) in order to laterally move the side wall (I) which is inside of the wheel in the direction of the middle of the rim.

10. Tyre according to one of the previous claims, **characterized in that** the tyre bead (3A) at the side wall (I) which is inside of the wheel is bend-proof.

11. Tyre according to one of the previous claims, **characterized in that** both side walls of the tyre (A, I) are movable in the same direction due to the ratio of support of the reinforcing support (7) of the side wall (I) which is inside of the wheel to the reinforcing support at the side wall (A) which is outside of the wheel, so that the tyre body can be preloaded in the lateral direction of force against exterior reaction forces in the direction of the exterior (A) of the tyre.

12. Tyre according to one of the previous claims, **characterized in that** the reinforcing supports (7) are designed in such a manner that the bend-proof tyre bead (3A) of the tyre (1) mounted to the rim and being under a customary operating internal air pressure is tiltable between 5° and 30°, preferably between 15° and 25°, from the vertical of the corner of the rim in the direction of the middle of the rim so that the tyre gets an asymmetrical cross section.

13. Tyre according to one of the previous claims, wherein the side wall (A) which is outside of the wheel is provided with pliable reinforcements (A1), in particular a rubbing ring (A1) extending concentrically to the axis of rotation of the tyre, more particularly multiple concentrically extending bending joints (A2) and rubbing rings (A1) concentrically arranged in an alternating manner.

## Revendications

1. Pneumatique de véhicule (1) pour un véhicule à plusieurs voies ayant des talons de pneumatique (3A, 3B) à une paroi (1) à l'intérieur de la roue et à une paroi (A) à l'extérieur de la roue du pneu, qui présentent une carcasse (8) repliant des bagues de noyau (2A, 2B),
**caractérisé en ce que**
des supports de renforcement, à savoir un tringle annulaire (7), sont prévus à la paroi (1) à l'intérieur de la roue du pneu (1) et
ils ne sont pas prévus de supports de renforcement, à savoir des tringles annulaires, à la paroi (A) à l'extérieur de la roue, de façon que la paroi (I) à l'intérieur de la roue présente une rigidité latérale dans la direction latérale dehors de la jante supérieure à celle de la paroi (A) à l'extérieur de la roue.

2. Pneu selon l'une des revendications précédentes **caractérisé en ce que** la bande de roulement du pneu est symétrique au plan équatorial du pneu et/ou il est de telle manière qu'il ne produit pas de dérive par rapport au plan équatorial du pneu, le pneu n'étant pas sous pression d'air interne opérante normale.

3. Pneu selon l'une des revendications précédentes, dans lequel les supports de renforcement (7) sont de telle manière qu'ils s'étendent à partir d'une direction radial d'une zone (51) adjacente d'un rebord de jante (5A) de la jante (5) à une zone (52) dirigée radialement vers l'extérieur, qui n'est pas adjacente au rebord de jante (5A), le pneu étant monté à une jante (5) et étant sous pression d'air interne opérante normale.

4. Pneu selon l'une des revendications précédentes, dans lequel les tringles annulaires (7) consistent en des matériaux durs, en particulier en caoutchouc dur, en plastiques ou en métaux.

5. Pneu selon l'une des revendications précédentes, dans lequel dans le talon de pneumatique (3A) la carcasse (8) est repliée environ l'ensemble des bagues de noyau (2) et des supports de renforcement (7).

6. Pneu selon l'une des revendications précédentes, dans lequel les supports de renforcement (7) sont de telle manière que, lorsque le pneu est monté sur une jante (5), la paroi (I) à l'intérieur de la roue est déplacée latéralement dans la direction du milieu de la jante, en particulier lorsque le pneu de véhicule est sous charge,

7. Pneu selon l'une des revendications précédentes, dans lequel, lorsque le pneu est monté sur une jante (5), un profil de support résistant à la pression (7A) est lié aux supports de renforcement (7) à la paroi (I) à l'intérieur de la roue à hauteur du rebord de jante (5A) y adjacent, qui peut déplacer latéralement la paroi (I) à l'intérieur de la roue dans la direction du milieu de la jante, dans lequel en particulier le tringle annulaire présente une protubérance (7A) dirigée au rebord de jante à hauteur du rebord de jante (5A) y adjacent pour former le profil de support.

8. Pneu selon l'une des revendications précédentes, dans lequel, lorsque le pneu est monté sur une jante (5), un profil de support résistant à la pression (6) est lié à la paroi (I) à l'intérieur de la roue à hauteur du rebord de jante (5A) y adjacent, qui peut déplacer latéralement la paroi (I) à l'intérieur de la roue dans la direction du milieu de la jante ; de préférence avec des moyens de traction à haute résistance dans la direction circonférentielle, qui sont flexible dans la direction radiale, dans lequel le profil de support est joint à la paroi extérieure de la paroi (I) à l'intérieur de la roue, en particulier par collage ou vulcanisation, dans lequel de préférence un fil d'une résistance élevée à la traction ou de l'aramide est prévu comme moyen de traction, en particulier sous la forme des enroulements dirigés dans la direction circonférentielle et / ou du caoutchouc comme matériau flexible, en particulier ayant une dureté Shore d'au moins 60.

9. Pneu selon l'une des revendications précédentes avec une bague séparée comme profil de support résistant à la pression à la paroi (I) à l'intérieur de la roue à hauteur du rebord de jante (5A) y adjacent, de telle manière que, lorsque le pneu est monté sur une jante (5), il est serré entre la paroi (I) à l'intérieur de la roue et le rebord de jante (5A) pour déplacer latéralement la paroi (I) à l'intérieur de la roue dans la direction du milieu de la jante.

10. Pneu selon l'une des revendications précédentes, **caractérisé en ce que** le talon de pneumatique (3A) à la paroi (I) à l'intérieur de la roue est rigide en flexion.

11. Pneu selon l'une des revendications précédentes, **caractérisé en ce que** les deux parois (A, I) de la roue sont déplaçables dans le même sens à cause du rapport de solidité des supports de renforcement (7) de la paroi (I) à l'intérieur de la roue au support de renforcement de la paroi (A) à l'extérieur de la roue, de façon que le corps de pneu peut être précontraint dans la direction de la force latérale contre des forces de réaction externes dans la direction de la paroi (A) externe du pneu,

12. Pneu selon l'une des revendications précédentes, **caractérisé en ce que** les supports de renforcement (7) sont de telle manière que le talon de pneumatique (3A) rigide en flexion du pneu (1) monté sur la jante et étant sous pression d'air interne opérante normale est pivotable entre 5° et 30°, de préférence entre 15° et 25°, de la verticale au point d'angle de la jante dans la direction du milieu de la jante, de façon que le pneu obtient une section transversale asymétrique.

13. Pneu selon l'une des revendications précédentes, dans lequel la paroi (A) à l'extérieur de la roue présente des renforcements (A1) souples à flexion, en particulier une bague à frotter (A1) dirigée concentriquement à l'axe de rotation du pneu, en outre de préférence plusieurs jointures de flexion (A2) dirigées concentriquement et bagues à frotter (A1) alternantes dirigées concentriquement,
